Europäisches Patentamt

European Patent Office

Office européen des brevets

(19)

(11) Veröffentlichungsnummer: **0 271 819**
**B1**

# EUROPÄISCHE PATENTSCHRIFT

(12)

(45) Veröffentlichungstag der Patentschrift:
**22.08.90**

(21) Anmeldenummer: **87118205.1**

(22) Anmeldetag: **09.12.87**

(51) Int. Cl.⁵: **F16J 15/52**, F16J 3/04, B60K 26/02, B62D 33/06

(54) **Vorrichtung zum Verschliessen eines Spaltes.**

(30) Priorität: **13.12.86 DE 3642680**

(43) Veröffentlichungstag der Anmeldung:
**22.06.88 Patentblatt 88/25**

(45) Bekanntmachung des Hinweises auf die Patenterteilung:
**22.08.90 Patentblatt 90/34**

(84) Benannte Vertragsstaaten:
**AT BE CH DE ES FR GB IT LI**

(56) Entgegenhaltungen:
EP-A- 0 180 903
DE-A- 2 634 802
FR-A- 2 448 667
GB-A- 2 022 724
GB-A- 2 136 514
US-A- 3 051 008
US-A- 4 558 869

(73) Patentinhaber: **DEERE & COMPANY, 1 John Deere Road, Moline, Illinois 61265(US)**

(72) Erfinder: **Karch, Rudi, Richinesstrasse 19, D-6700 Ludwigshafen-Ruchheim(DE)**

(74) Vertreter: **Feldmann, Bernhard, DEERE & COMPANY European Office, Patent Department Steubenstrasse 36-42 Postfach 503, D-6800 Mannheim 1(DE)**

## Beschreibung

Die Erfindung betrifft eine Vorrichtung zum Verschließen eines Spaltes zwischen einem Betätigungshebel und einer diesen während seiner Bewegung umgebenden Führung mittels einer Manschette, die einenends den Betätigungshebel dichtend umgreift.

Vorrichtungen der gattungsgemäßen Art werden herkömmlich dazu benutzt, zwei Räume gegeneinander abzudichten, damit Feuchtigkeit, Lärm, Schmutz oder dergleichen nicht oder nur begrenzt von einem Raum in den anderen gelangen. Derartige Vorrichtungen finden daher Anwendung bei Fahrerkabinen oder Passagierräumen von Kraftfahrzeugen, bei Bedienungseinheiten von Werkzeugmaschinen, bei Behälterverschlüssen mit beweglichen Einsätzen und dergleichen.

So wird bei einer bekannten Vorrichtung (Druckschrift NLI 9/85 (GDS) 300 von CLAAS OHG) der Spalt zwischen einer Fahrerplattform und einem Pedal mittels einer Weichkunststoffmanschette verschlossen, um zu vermeiden, daß Staub und Lärm von außen in eine Fahrerkabine durch diesen Spalt drängen.

Diese Vorrichtung ist nur bei Betätigungshebeln verwendbar, deren Bewegungsbahn in einer Richtung oder im wesentlichen in einer Richtung verläuft. Sobald sich der Betätigungshebel in zwei oder mehr Richtungen bewegt, muß die Manschette in großem Maße dehnbar sein. Dadurch wird die Manschette aber entweder relativ groß, oder es treten Spannungen in ihrem Material auf, die frühzeitig zu Schäden führen.

Die der Erfindung zugrunde liegende Aufgabe wird darin gesehen, eine Vorrichtung zum Verschließen eines Spaltes zwischen einem Betätigungshebel und einer Führung zu schaffen, bei der der Betätigungshebel eine Bewegung in mindestens zwei Richtungen ausführen kann.

Diese Aufgabe ist durch die Lehre gemäß Patentanspruch 1 gelöst worden, da auf diese Weise die Manschette die Bewegung in der einen Richtung und das Zwischenstück die Bewegung in der anderen Richtung aufnehmen kann, wobei sowohl die Manschette wie das Zwischenstück für die ihnen zugeordnete Bewegung befestigt und ausgebildet sind.

In den weiteren Patentansprüchen sind vorteilhafte Merkmale enthalten, die die Abdichtfunktion noch erhöhen, die die Montierbarkeit des Betätigungshebels erleichtern und die die Lebensdauer des Zwischenstücks vergrößern.

So wird durch die Bewegung des Zwischenstückes abhängig von der Bewegung des Betätigungshebeln gewährleistet, daß die Manschette nur einen bestimmten und zulässigen Weg zurücklegt. Die Vorkehrung der Stützrollen vermeidet Schäden an dem Zwischenstück, wenn der Betätigungshebel, z.B. ein Pedal, sehr oft an dem Zwischenstück zur Anlage gebracht wird. Die feste Aufnahme der Stützrollen in dem Rahmen erhöht deren Kraftaufnahmekapazität, zumal der Rahmen relativ stabil ausgebildet sein kann, während das Zwischenstück flexibel bleibt, wie dies bei einer Schiebelasche der Fall ist. Die Flexibilität einer Schiebelasche erlaubt es, die Abdichtung des Spaltes mit einer sehr flachen Vorrichtung zu erreichen, im Gegensatz zu einer aus der DE-A 2 328 952 bekannten Vorrichtung, deren Aufbau, bedingt durch das Vorhandensein mehrerer Dichtlamellen, relativ hoch ist. Mittels der Brücke kann der in der Schiebelasche enthaltene Rahmen einerseits zur Einführung des Betätigungshebels geöffnet und nach der Einführung wieder geschlossen werden. Ein Verschluß des Spaltes auch gegen wirbelnde feuchte Medien oder gegen unter Druck stehende Medien wird durch das stramme Anliegen der Manschette an dem Rahmen und somit an dem Zwischenstück erreicht.

In der Zeichnung ist ein nachfolgend näher beschriebenes Ausführungsbeispiel der Erfindung dargestellt. Es zeigt:

Figur 1 eine erfindungsgemäße Vorrichtung zum Verschließen eines Spaltes in Seitenansicht und im Vertikalschnitt,

Figur 2 die Vorrichtung nach Figur 1 in Vorderansicht und im Vertikalschnitt entlang der Linie 2–2 und in Blickrichtung der dazugehörigen Pfeile in Figur 1 und

Figur 3 eine perspektivische Ansicht eines in der Vorrichtung nach Figur 1 enthaltenen Zwischenstückes.

Eine Vorrichtung 10 zum Verschließen eines Spaltes zwischen einem Betätigungshebel 12 und einer Führung 14 enthält ein Zwischenstück 16, eine Manschette 18, einen Rahmen 20, zwei Stützrollen 22 und zwei Halterungen 24.

Der Betätigungshebel 12 wird in diesem Ausführungsbeispiel vonn einem Pedal gebildet, dessen Pedalarm 26 nicht radial zu dem Schwenkpunkt verläuft, sondern abgewinkelt. Aufgrund dieser Formgebung beschreibt der Betätigungshebel 12 eine Schwenkbewegung mit einem großen Anteil an Vertikalbewegung zusätzlich zu der ohnehin vorhandenen Tangential- bzw. Horizontalbewegung. Die erfindungsgemäße Vorrichtung muß also relativ große Wege in zwei Richtungen dichtend überbrücken. Selbstverständlich können die Bewegungen auch in anders gelegenen Ebenen erfolgen; die Angaben horizontal und vertikal beziehen sich daher nur auf dieses Ausführungsbeispiel und mit Blick auf die Zeichnung.

Der Betätigungshebel 12 erstreckt sich beweglich durch die in einem Boden 28 einer Fahrerkabine eines Ackerschleppers vorgesehene Führung 14, und mit der Vorrichtung 10 soll verhindert werden, daß kalte und feuchte Luft sowie Schmutz und Schallwellen von dem Raum unterhalb des Bodens 28 in den Raum oberhalb des Bodens 28 gelangen.

Die Führung 14 in dem Boden 28 wird von einem Schlitz gebildet, der ausreichend groß ist, um die Bewegung des Betätigungshebels 12 zuzulassen, wobei jedoch zwischen dem Pedalarm 26 und der Schlitzwandung ein abzudichtender Spalt besteht.

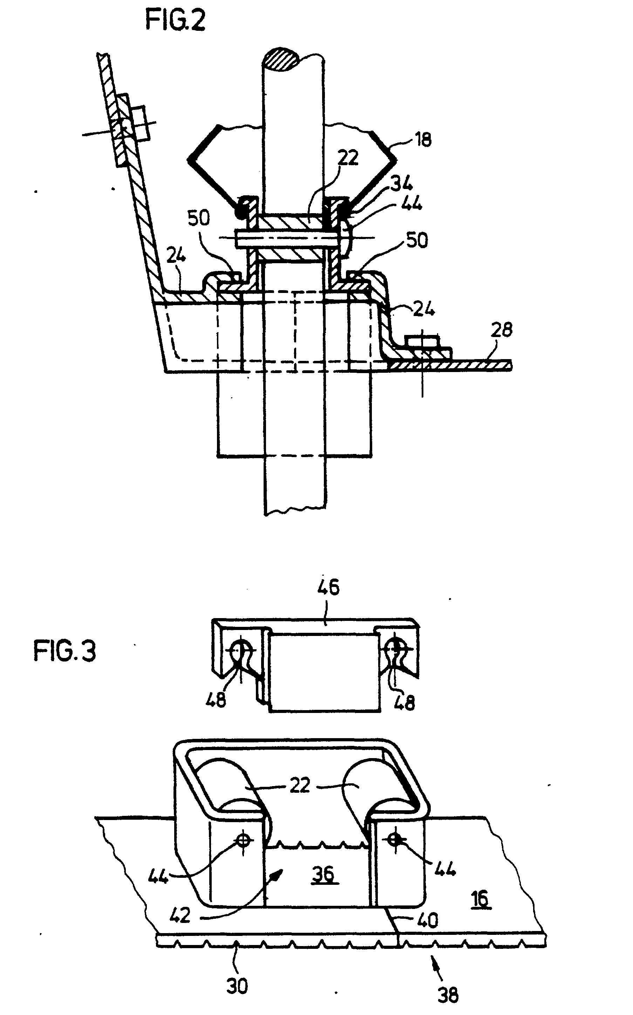

Als Zwischenstück 16 dient in diesem Ausführungsbeispiel eine Schiebelasche mit an der Unterseite vorgesehenen, aus Figur 3 ersichtlichen Nuten 30, die ein großes Formänderungsvermögen in einer Ebene ergeben. Diese Nuten 30 sind nur erforderlich, wenn das Zwischenstück 16 von größerer Materialdicke ist; hingegen können sie bei einem dünnen Zwischenstück 16, das sehr flexibel und biegsam ist, entfallen. Das Zwischenstück 16 ist seitlich der Bewegungsebene des Betätigungshebels 12 in den Halterungen 24 verschieblich geführt und ist so lang, daß es jeweils an den Enden der Halterungen 24 noch übersteht, wenn der Betätigungshebel 12 eine seiner Endstellungen erreicht hat. Das Zwischenstück 16 ist also ungefähr doppelt so lang wie die Führung 14.

Es wäre möglich, anstatt des aus einer Schiebelasche gebildeten Zwischenstückes 16 ein auf Rollen gelagertes Zwischenstück oder ein verformbares Gehäuse zu verwenden, das gegenüber der Führung 14 bewegt werden kann und die Manschette 18 aufnimmt, um so den tangentialen Anteil der Bewegung des Betätigungshebels 12 aufzunehmen.

Die Manschette 18 ist als einfacher Gummibalg oder Weichkunststoffbalg, der in Axialrichtung zusammenschiebbar und auseinanderziehbar ist. Sie weist an ihrem oberen und ihrem unteren Endbereich einen elastischen Kragen 32 und 34 auf, die innerhalb bestimmter Grenzen dehnbar sind. Der Innenumfang des oberen Kragens 32 ist so groß, daß er den Pedalarm 26 kraftschlüssig umgibt und somit an dem Betätigungshebel 12 gehalten ist. Selbstverständlich könnte der obere Kragen 32 auch weiter ausgebildet sein und mittels eines Spannringes, eines Drahtes oder eines Fadens auf dem Pendelarm 26 befestigt werden.

Der Rahmen 20 nimmt die Form eins rechteckförmigen Ringes ein, der mit einer seiner offenen Seiten auf das Zwischenstück 16 aufgesetzt ist, wobei das Zwischenstück 16 in diesem Bereich eine Öffnung 36 aufweist, durch die sich der Pedalarm 26 erstrecken kann. Der Rahmen 20 kann aus einem Teil mit dem Zwischenstück 16 gebildet sein, er kann aber auch auf dieses aufgeschweißt, aufgeklebt oder mit diesem formschlüssig verbunden sein. Zwischen der Öffnung 36 und einem Rand 38 des Zwischenstückes 16 ist eine Trennung 40 vorgesehen. Der Rahmen 20 ist auf einer der dem Rand 38 und der Trennung zugelegenen Seite mit einer Aussparung 42 versehen, deren Breite mindestens der geringsten Breite des Pedalarms 26 entspricht, so daß der Pedalarm 26 seitlich durch die Trennung 40 in die Öffnung 36 und in den Innenraum des Rahmens 20 eingeführt werden kann.

Durch jede Stützrolle 22 erstreckt sich eine Achse 44, mittels derer die beiden Stützrollen 22 drehbar in dem Innenraum des Rahmens 20 angebracht sind, die endseitig in dem Rahmen 20 gehalten sind. Der Abstand der Stützrollen 22 zueinander ist derart gewählt, daß zwischen sie der Pedalarm 26 auch an der Stelle mit seiner größten Breite paßt, und ihre Anordnung ist so getroffen, daß der Pedalarm 26 an ihrem Umfang anliegen und auf diesem abrollen kann. Da der Pedalarm 26 also nicht an der Wandung des Rahmens 20 entlang schleift, sondern auf jeweils einer der Stützrollen 22 abrollt, wenn er geschwenkt wird, findet kein Abrieb an dem Rahmen 20 infolge der Relativbewegung zwischen dem Betätigungshebel 12 und dem Rahmen 20 statt.

Die Aussparung 42 wird durch eine Brücke 46 geschlossen, die im Horizontalschnitt einen T-förmigen Querschnitt aufweist, wobei der Fuß des —T– die Aussparung 42 ausfüllt und der Querteil des —T– auf jeder Seite einen Schlitz 48 aufweist, der in sich einen Endteil der Achsen 44 aufnehmen kann. Die Breite des Querteils entspricht dabei dem Abstand zwischen der Innenwand des Rahmens 20 und der Stirnseite der Stützrollen 22. Die Brücke 46 kann also mit Blick auf Figur 3 von oben in die Aussparung 42 und über die Achsen 44 geschoben werden, so daß sich der als Ring ausgebildete Rahmen 20 unter hoher Beanspruchung nicht aufweiten kann. Unterliegt der Rahmen 20 keiner hohen Beanspruchung, dann kann auf die Brücke 46 verzichtet werden.

Der untere Kragen 34 der Manschette 18 weist eine innere Weite auf, die ausreicht, den Rahmen 20 zu umspannen und die Manschette 18 festzuhalten. Die dadurch aufgebrachte Spannung bewirkt, daß die Brücke 46 nicht aus der Aussparung 42 entweichen kann.

Die Halterungen 24 sind auf beiden Seiten des Zwischenstückes 16 vorgesehen und auf den Boden 28 aufgeschraubt. Sie weisen jeweils eine Längsnut 50 auf, in denen das Zwischenstück 16 in der Bewegungrichtung, d.h. der Schwenkebene des Betätigungshebels 12, verschieblich geführt ist.

Zur Montage wird zunächst der Betätigungshebel 12 in die Führung 14 durch den Boden 28 und in die Öffnung 36 in dem Zwischenstück und dem Innenraum des Rahmens 20 auf dem Weg über die Trennung 40 und die Aussparung 42 eingeführt. Daraufhin kann die Aussparung 42 mit der Brücke 46 verschlossen werden. Danach werden die Halterungen 24 derart auf den Boden 28 aufgeschraubt, daß sie das Zwischenstück 16 in ihren Längsnuten 50 aufnehmen. Schließlich wird die Manschette 18 über den Betätigungshebel 12 geschoben und mit ihrem unteren Kragen 34 auf dem Rahmen 20 befestigt. Der obere Kragen 32 wird an eine Stelle auf dem Pedalarm 26 geschoben, die so gelegen ist, daß in der einen Endstellung des Betätigungshebels 12 die Manschette 18 nicht zu sehr gestreckt und in der anderen nicht zu sehr gestaucht wird.

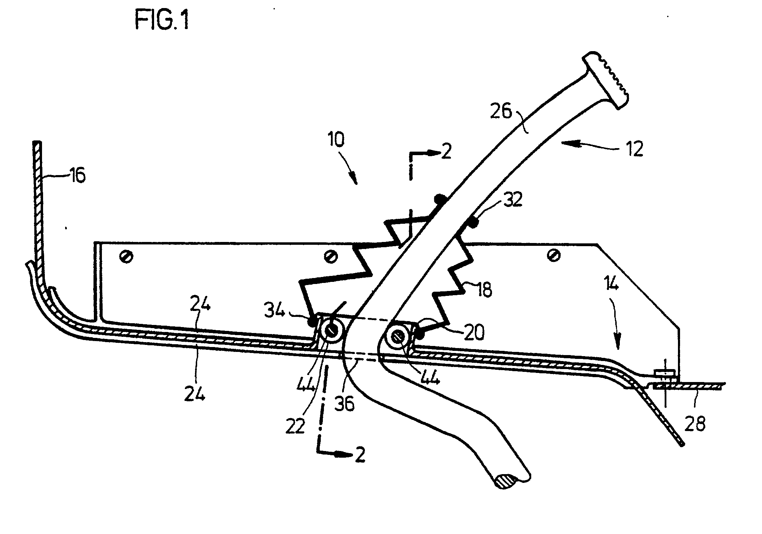

Insbesondere mit Blick auf Figur 1 wird deutlich, daß bei einem Schwenkvorgang des Betätigungshebels 12 entgegen dem Uhrzeigerdrehsinn die Manschette 18 zusammengeschoben und das Zwischenstück 16 nach links bewegt wird, wobei sich der Pedalarm 26 an den Stützrollen 22 abstützt. Man kann erkennen, daß durch die angepaßte Bewegung der Manschette 18 in der Schwenkebene des Betätigungshebels 12 die Manschette 18 im wesentlichen nur den vertikalen Weg des Betätigungshebels 12 mitvollziehen muß.

## Patentansprüche

1. Vorrichtung (10) zum Verschließen eines Spaltes zwischen einem Betätigungshebel (12) und einer diesen während seiner Bewegubg umgebenden Führung (14) mittels eines Manschette (18), die einends den Betätigungshebel (12) dichtend umgreift, dadurch gekennzeichnet, daß die Manschette (18) anderenends auf einem gegenüber der Führung (14) beweglichen Zwischenstück (16) getragen ist.

2. Vorrichtung nach Anspruch 1, dadurch gekennzeichnet, daß der Bettigungshebel (12) an dem Zwischenstück (16) zur Anlage bringbar ist und das Zwischenstück (16) bewegt.

3. Vorrichtung nach Anspruch 1, dadurch gekennzeichnet, daß das Zwischenstück (16) als Schiebelasche ausgebildet ist und in entsprechenden Halterungen (24) in der Führung (14) geführt ist.

4. Vorrichtung nach Anspruch 2, dadurch gekennzeichnet, daß zwischen dem Zwischenstück (16) und dem Betätigungshebel (12) Stützrollen (22) vorgesehen sind.

5. Vorrichtung nach Anspruch 4, dadurch gekennzeichnet, daß das Zwischenstück (16) einen Rahmen (20) aufweist, in dessen Innenraum die Stützrollen (22) und auf dessen Außenwandung die Manschette (18) angeordnet sind.

6. Vorrichtung nach Anspruch 5, dadurch gekennzeichnet, daß der Rahmen (20) einerseits offen und mittels einer Brücke (46) verschließbar ist.

7. Vorrichtung nach Anspruch 4 oder 5, dadurch gekennzeichnet, daß die Manschette (18) den Rahmen (20) kraftschlüssig umgibt.

8. Vorrichtung nach Anspruch 6, dadurch gekennzeichnet, daß die Stützrollen (22) auf Achsen (44) gelagert sind und die Brücke (46) die Achsen (44) übergreift.

## Claims

1. Arrangement (10) for closing a gap between an operating lever (12) and a guide (14) surrounding the lever during its movement, by means of a sleeve (18) which engages the operating lever (12) at one end in sealed manner, characterized in that the sleeve (18) is carried at the other end by an intermediate piece (16) movable relative to the guide (14).

2. Arrangement according to claim 1, characterized in that the operating lever (12) can be brought into abutment with the intermediate piece (16) and moves the intermediate piece (16).

3. Arrangement according to claim 1, characterized in that the intermediate piece (16) is formed as a sliding tongue and is guided in corresponding retainers (24) in the guide (14).

4. Arrangement according to claim 2, characterized in that support rollers (22) are provided between the intermediate piece (16) and the operating lever (12).

5. Arrangement according to claim 4, characterized in that the intermediate piece (16) has a frame (20), in whose interior are arranged the support rollers (22) and on whose outer wall is arranged the sleeve (18).

6. Arrangement according to claim 5, characterized in that the frame (20) is open at one side and can be closed by means of a bridge (46).

7. Arrangement according to claim 4 or 5, characterized in that the sleeve (18) surrounds the frame (20) in interlocking manner.

8. Arrangement according to claim 6, characterized in that the support rollers (22) are mounted on spindles (44) and the bridge (46) engages over the spindles (44).

## Revendications

1. Dispositif (10) pour fermer une fente entre un levier d'actionnement (12) et une gaine (14) l'entourant pendant son mouvement, au moyen d'un joint (18) qui embrasse de façon étanche, à une extrémité, le levier d'actionnement (12), caractérisé en ce que la gaine (18) est supporté à son autre extrémité sur une pièce intercalaire (16) mobile par rapport au guide (14).

2. Dispositif suivant la revendication 1, caractérisé en ce que le levier d'actionnement (12) peut être amené en contact avec la pièce intercalaire (16) et déplace la pièce intercalaire (16).

3. Dispositif suivant la revendication 1, caractérisé en ce que la pièce intercalaire (16) se présente sous la forme d'une patte coulissante et est guidée dans des fixations correspondantes (24) dans le guide (14).

4. Dispositif suivant la revendication 2, caractérisé en ce que des rouleaux d'appui (22) sont prévus entre la pièce intercalaire (16) et le levier d'actionnement (12).

5. Dispositif suivant la revendication 4, caractérisé en ce que la pièce intercalaire (16) comporte un bâti (20) à l'intérieur duquel les rouleaux d'appui (22) sont placés et sur la paroi extérieur duquel la gaine (18) est placée.

6. Dispositif suivant la revendication 5, caractérisé en ce que la bâti (20) est ouvert d'un côté et peut être fermé au moyen d'une barrette (46).

7. Dispositif suivant la revendication 4 ou 5, caractérisé en ce que la gaine (18) entoure le bâti (20) en exerçant une force.

8. Dispositif suivant la revendication 6, caractérisé en ce que les rouleaux d'appui (22) sont placés sur des axes (44) et la barette (46) recouvre les axes (44).

FIG.1

FIG.2

FIG.3